# EUROPEAN PATENT APPLICATION

(11) **EP 3 835 683 A1**
(43) Date of publication of application: **16.06.2021**
(21) Application number: 19383112.0
(22) Date of filing: 13.12.2019
(51) Int. Cl.: F24S 10/75, F24S 20/64, F24S 20/66, F24S 20/67, F24S 20/00

(54) **MODULAR THERMAL TRANSFER HYDRAULIC SYSTEM**

(71) Applicant: Fundación Tecnalia Research & Innovation, 48160 Derio - Bizkaia (ES); Universidad del Pais Vasco - Euskal Herriko Unibertsitatea (UPV/EHU), 48940 Leioa (ES)
(72) Inventor: Elguezabal Esnarrizaga, Peru, 48160 Derio - Bizkaia (ES); Astudillo Larraz, Julen, 48160 Derio - Bizkaia (ES); Arregi Goikolea, Beñat, 48160 Derio - Bizkaia (ES); Garay Martinez, Roberto, 48160 Derio - Bizkaia (ES); Blanco Ilzarbe, Jesus Mª, 48940 Leioa (ES); Lopez Dominguez, Alexander, 48940 Leioa (ES)
(74) Representative: Balder IP Law, S.L.

(57) **Abstract**

The invention refers to a modular hydraulic system that comprises a plurality of hydraulic modules, each hydraulic module comprising a panel and a hollow pipe attached to a rear surface of the substantially planar panel, and joining means to attach the substantially planar panels of two adjacent hydraulic modules to each other. The joined panels form a front surface of the modular hydraulic system. The modular hydraulic system further comprises hydraulic connection means to connect the hollow pipes of the hydraulic modules to each other creating a hydraulic circuit a fluid is to flow through, and means for attaching the modular hydraulic system to a surface of a building with the hydraulic circuit being located between the substantially planar panels and the surface of the building. The fluid is configured to exchange energy with the environment. The system comprises a cover adapted to be attachable to the joining means for covering the front surface of the panels.

## Description

### TECHNICAL FIELD

The present invention relates generally to modular thermal transfer hydraulic systems for outer or inner surfaces of buildings, and more particularly, to modular hydraulic systems attachable to different kind of surfaces of buildings and that are able to act as an energy absorber (heat collector) or energy emitter (heat emitter) generating different active thermal solutions for the building where the modular hydraulic systems are installed.

### STATE OF THE ART

The increasing implementation of BISTS (Building Integrated Solar Thermal Systems) may instigate a transition of the building product industry towards a more open attitude with respect to different building designs, new functionalities and competitiveness of conventional building claddings. The influence of BISTS on the appearance of single buildings and building groups can be significant.

Water heating BISTS are one big sector of building integrated solar thermal systems. However, until recently, in many of the cases the solar collector was just superimposed on different building components rather than being an integral part of it. This was partly due to the fact that very few collectors existed in the market that allowed sufficient architectural and structural flexibility for their integration into the building structure.

The most common type of solar collector is the glazed flat plate collector. This type of collector includes a weatherproofed, insulated box or frame containing a metal absorber plate with built-in pipes. Typically, it is 5 to 10 cm and is also mounted directly on, or just above, the roof mainly or, alternatively, on the façade of a house so that is placed in the path of sunlight. The pipes built into the absorber carry a heat transfer fluid that is usually water, but can be a different fluid, such as a mixture of water with propylene glycol. The absorber sits within the collector and is usually black or any other dark colour to absorb the most solar energy possible. The flat plate collector also includes a transparent or translucent cover over the absorber. The cover is typically a solar safety glass, which functions to slow down heat loss by radiation trapping solar energy inside the collector thanks to the greenhouse effect. Insulation on the bottom of the collector, behind the absorber, and on the sides, reduces conductive heat losses. Solar energy heats up water in the pipes causing it to circulate through the system and passed to a storage tank located within the house.

One of the main restrictions for the integration of such collectors in a building structure is the presence of the transparent glass cover which can reduce reliability, increase maintenance requirements and cause injury in the case of breakage. As a result, some of the available solar thermal collectors currently made for building integration are unglazed. This adaptation of glazed panels implies a simpler design and thus enabling higher integration capabilities.

Similarly, the use of radiant heating (thermal emitters) and cooling systems (thermal absorbers) in the living spaces such as homes, offices and other living areas is significantly increasing in recent years. These systems are normally integrated into the walls, the ceiling or the floor of the living space to be heated and/or cooled.

However, thermal collectors located on the roofs or facades are normally systems which present a low flexibility in their geometry, support materials, and adaptability to different façade configurations. Generally speaking, due to the constraints associated to fixed module designs with strict defined dimensions, said systems are not easily adaptable to the geometries of the surface on which are going to be installed which in turn results in an efficiency reduction and in costs increases. On the other hand, existing thermal emitters, such as radiations, and thermal absorbers, such as conventional A/C systems, located within living spaces present high installation costs and time (radiating floors) and slow capability for blending in the walls (radiant panels).

### DESCRIPTION OF THE INVENTION

The object of the invention is a modular hydraulic system attachable to a surface of a building and that is able to act as a thermal absorber or emitter depending on where the modular hydraulic system is located in the building and the energy requirements of the building the modular hydraulic system is placed on. For example, the modular hydraulic system may be located on a façade or a roof of a building and act as a heat absorber of solar energy or may be located on the inner walls (side walls, ceiling or ground floor) of a living space such as a room, an office, etc., an act as a heat emitter or heat absorber to heat or cool said living space, respectively.

The modular hydraulic system comprises a plurality of hydraulic modules couplable to each other. Each hydraulic module comprises a substantially planar panel and a hollow pipe attached to a rear surface of the substantially planar panel. In some embodiments, the substantially planar panel may be a rectangular-shaped or quadrangular-shaped panel. In some other embodiments, the substantially planar panel may have any other geometry or shape adapted to the particular geometry or shape of the surface of the building the hydraulic modules are to be mounted on to entirely or partially cover said surface. These hydraulic modules are generally made of materials with high thermal transfer coefficients in order to maximize thermal transmission effect between the modular hydraulic system and the surrounding environment. For example, the hydraulic modules may be made of a metal or any other material able to conduct heat By way of example, these other materials may be any material having a conductivity higher than 50 W/mK and with the capability of being extrudable, such as steel alloys, aluminium alloys, cooper alloys, among others.

The modular hydraulic system further comprises joining means configured to attach the substantially planar panels of two adjacent hydraulic modules to each other forming a substantially (continuous) front surface of the modular hydraulic system. These joining elements may be integrated into the panels themselves or may be independent elements attachable to the panels.

The modular hydraulic system also comprises hydraulic connection means configured to connect the hollow pipes of the hydraulic modules to each other creating a hydraulic circuit a fluid, e.g., water, is to flow through. The hydraulic connection means may be, for example, pipes or rigid or flexible tubes, that connect the hollow pipes of the hydraulic modules to create the hydraulic circuit such that the fluid is able to enter the hydraulic circuit at a first temperature and exit the hydraulic circuit at a second temperature that is different from the first temperature. This fluid is a heat-transfer fluid configured to exchange heat with the environment. Thus, the fluid may be a low-temperature heat-transfer fluid to absorb heat from the environment or may be a high-temperature heat-transfer fluid to emit heat to the environment depending on where the modular hydraulic system is located in the building and the energy requirements of the building the modular hydraulic system is placed on.

Although water may be used as a preferred heat-transfer fluid, other fluids like mixtures of propylene glycol-water, ethanol-water, etc., may be used. The choice of fluid used is dependent on different factors such as the particular location of the modular hydraulic system in the building (inside or outside), corrosiveness of the fluid, resistance to contamination, filtration, freezing temperature, and evaporation.

The modular hydraulic system of the invention comprises a cover layer adapted to be attachable to the joining means for covering the front surface of the panels. This cover layer may comprise standard cladding and finishing pieces such as concrete, stone, ceramic tiles, drywalls, façade panels, tiles, metal etc.) to generate active outer thermal surfaces. This cover layer, in addition to providing an aesthetic finishing material for the facades, roofs or the inner walls of a room, is also configured to absorb or radiate heat from/to the surrounding environment.

The cover layer may be attached to the joining means by adhesive or any mechanical connection. As a result, there's no connection element between the planar panel and the cover, and a direct face to face contact is achieved between these two elements improving thermal transmission.

The modular hydraulic system further comprises means for attaching the modular hydraulic system to the surface of the building. The hydraulic modules are positioned relative to the surface to which they are attached to such that the hydraulic circuit is located between the substantially planar panels and the surface of the building and the cover layer acting as a finishing external surface. In this way, the heat transfer panels are outwardly positioned to receive sun radiation when placed outside of the building and are positioned towards the space to be radiated when placed inside the building.

In some preferred embodiments, the joining means are transition elements interposed between the edges of every two hydraulic modules. Each transition element is configured to be coupled to adjacent edges of the corresponding panels of two adjacent hydraulic modules. For example, the transition elements may be longitudinal planar elements having a length substantially similar to the length of the edges to which they are joined. Moreover, the transition elements may be made of metal or a heat conductive plastic in order to minimize resistance to heat transmission between the panels and the transition elements and thus, homogenising temperatures between the panels.

The cover layer is adapted to be attachable to the front surface of the transition elements that joins the panels of the hydraulic modules. This cover layer may comprise standard cladding and finishing pieces such as ceramic tiles, drywalls, façade panels, tiles etc.) to generate active outer thermal surfaces. This cover layer, in addition to providing an aesthetic finishing material for the facades, roofs or the inner walls of a room, is also selected to absorb or radiate heat from/to the surrounding environment.

In some embodiments, the modular hydraulic system may be installed on an outer surface of the building, preferably on a roof or a fagade. In such embodiments, the panels are configured to absorb solar radiation and transmit heat to the fluid flowing through the hydraulic circuit. The fluid enters the hydraulic circuit at a first temperature and exits the hydraulic circuit at a second temperature, the first temperature being lower than the second temperature. To effectuate this transfer of heat from the environment to the fluid, the cover layer is heated by the sun and the heat absorbed is transferred to the panels and to the fluid flowing through the hydraulic circuit. In such embodiments, the fluid flowing through the hydraulic circuit is at a temperature that is lower than the temperature at which the panels are heated by the sun, with or without interposition of the cover layer.

In some other embodiments, the modular hydraulic system is installed on an inner surface of the building, preferably on a wall, a ceiling or a ground floor of a living space. In such embodiments, the panels and the cover layer are configured to emit or absorb heat transmitted from the fluid flowing through the hydraulic circuit. The fluid enters the hydraulic circuit at a first temperature and exits the hydraulic circuit at a second temperature. The first temperature is higher than the second temperature when the modular hydraulic system is heating the living space and is lower than the second temperature when the modular hydraulic system is cooling the living space. To effectuate this thermal transfer from the fluid to the environment, the fluid heats or cools the panels and the cover layer that emits or absorbs heat to or from the living space. Then, the fluid flowing through the hydraulic circuit may be at a temperature that is higher than the living room temperature when the modular hydraulic system is to heat the living space or may be at a temperature that is lower than the living room temperature when the modular hydraulic system is to cool the living space

In some embodiments, the hollow pipes are longitudinal pipes extending along one of the two dimensions of the panels. Although the panels are 3-dimensional objects, the expression the "two dimensions of the panels" refer to the length and width of the panel while the height of the panel has not been considered for the purpose of defining the position of the pipes relative to the panel. Said longitudinal hollow pipes may preferably extended between two opposite edges of the panel. Alternatively, said longitudinal hollow pipes may only partially cover one of the two dimensions of the panels. In some embodiments, the longitudinal hollow pipes are located in the middle of the respective panels and extend between two opposite edges of the panels.

In some other embodiments, the hollow pipes are serpentine-shaped pipes entirely covering at least one of the two dimensions of the panels and at least partially covering the other dimension of the panels. The serpentine-shaped pipes allow the fluid to contact the panel through a larger surface area of the panel than with the longitudinal pipes increasing the heat transfer between the panels and the fluid.

In some embodiments, the modular hydraulic system comprises an insulation layer attached to a rear surface of the hydraulic modules. The insulation layer can comprise a material with a conductivity lower than 0.05W/mK, such as mineral wool, polyurethane or cork. This insulation layer mitigates heat transfer to the rear or backside of the modular hydraulic system (away from the living space when installed on an inner surface of the building away from the façade of the building when installed on said facade). The insulation layer may be one single layer adapted to the size and geometry of the plurality of hydraulic modules once attached to each other or may be formed by a plurality of independent insulation pieces, each insulation piece for a particular hydraulic module. These insulation pieces may have a geometry and shape similar to the geometry and shape of a corresponding hydraulic module and may be independently attached to the rear surface of the respective hydraulic module. The insulation layer may be glued to the rear surface of the hydraulic modules.

In some embodiments, the insulation layer comprises grooves with a shape and location that corresponds to the shape and location of the hollow pipes generating the negative surface coupling the pipes, such that an inner surface of the insulation layer contacts the hollow pipes and the rear surface of the hydraulic modules. For example, the insulation layer may have longitudinal grooves in which the longitudinal hollow pipes of the hydraulic modules are inserted.

### BRIEF DESCRIPTION OF THE DRAWINGS

To complete the description and in order to provide a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a perspective view of a hydraulic module, according to a particular embodiment of the present invention.
Figure 2 shows a perspective view of a transition element, according to a particular embodiment of the present invention.
Figure 3 shows a perspective view of a modular hydraulic system comprising three hydraulic modules joined to each other by interposition of two transition elements, according to a particular embodiment of the present invention.
Figure 4 shows a perspective view of a modular hydraulic system comprising a cover layer and an insulation layer, according to a particular embodiment of the present invention.
Figures 5A shows a perspective view of the modular hydraulic system of Figure 4 comprising the hydraulic connection means to create the hydraulic circuit, according to a particular embodiment of the present invention.
Figures 5B shows a perspective view of the modular hydraulic module of Figure 5A with the hydraulic connection means coupled to the respective hollow pipes of the hydraulic modules.
Figure 6 shows a perspective view of the hydraulic module of Figure 1 with an insulation layer coupled thereto.
Figure 7 shows a detailed view of an inner threaded end of a hollow pipe of a hydraulic module, according to a particular embodiment of the present invention.
Figure 8 shows a detailed view of an outer threaded end of a tube of the hydraulic connection means, according to a particular embodiment of the present invention

### DETAILED DESCRIPTION OF THE INVENTION

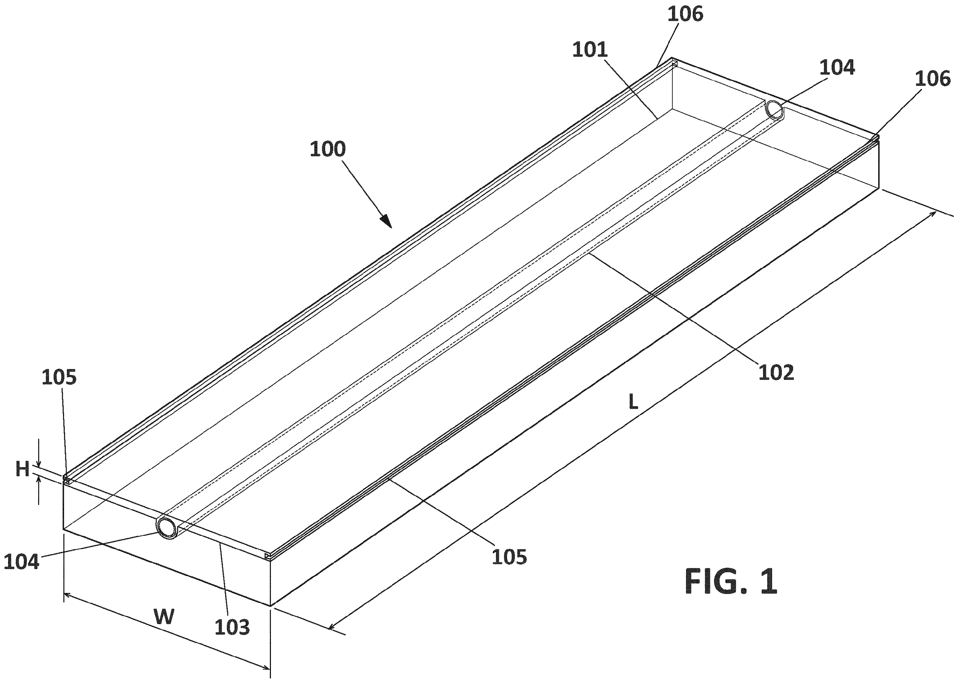

Figure 1 shows a perspective view of a hydraulic module 100, according a particular embodiment of the present invention. It should be understood that the hydraulic module 100 of Figure 1 may include additional components and that some of the components described herein may be removed and/or modified without departing from a scope of the described hydraulic module 100. Additionally, implementation of the hydraulic module 100 is not limited to such embodiment.

The hydraulic module 100 is formed by a substantially planar panel 101 and a longitudinal hollow pipe 102 attached to a rear surface 103 of the substantially planar panel 101. The longitudinal hollow pipe 102 is centred and located along the longitudinal axis of the planar panel 101 extending between two opposite edges of the panel 101. The two openings 104 of the longitudinal hollow pipe 102 are located in correspondence with the respective edges of the panel 101. The substantially planar panel 101 is a rectangular-shaped panel and it is 4 meters long (L) one meter wide (W) and 2,5 centimetres high (H). The external diameter of the hollow pipe is 1 mm whilst its internal diameter is 0.8mm. The hydraulic module 100 is made of a metal such as aluminium that is a resistant and light material, and thus especially useful for being used for construction, and has also a high thermal transfer coefficient in order to maximize thermal transmission between the hydraulic module 100 and the surrounding environment.

The hydraulic module 100 also has respective grooves 105 along the long side walls 106 of the planar panel 101 that act as female connectors. These grooves 105 are to receive respective male connectors of transitions elements (not shown in this figure) that interconnect the panels to each other. This grooves 105 may have a dove tail cross section as represented in figure 1. In some examples, one of the two long side walls may have a groove to receive a male connector of an adjacent panel and the other long side wall may have a male connector, e.g., a longitudinal protrusion, to be inserted in a groove of another adjacent panel.

While the substantially planar panel 101 of Figure 1 shows a rectangular shape, the panel 101 may have any other geometry or shape adapted to the particular geometry or shape of the surface of the building the hydraulic module 100 is to be mounted.

Besides, while the hydraulic module 100 of Figure 1 presents one single longitudinal hollow pipe 102 attached to the centre and in correspondence with longitudinal axis of the panel 101, the hydraulic module 100 may comprise different number of pipes, attached to different locations of the rear surface 103 of the panel 101 and having different geometries. For example, the hollow pipe may be a serpentine shaped hollow pipe that ha a greater contact area with the panel than the longitudinal hollow pipe to increase heat transmission between the panel and the fluid flowing through the hollow pipe.

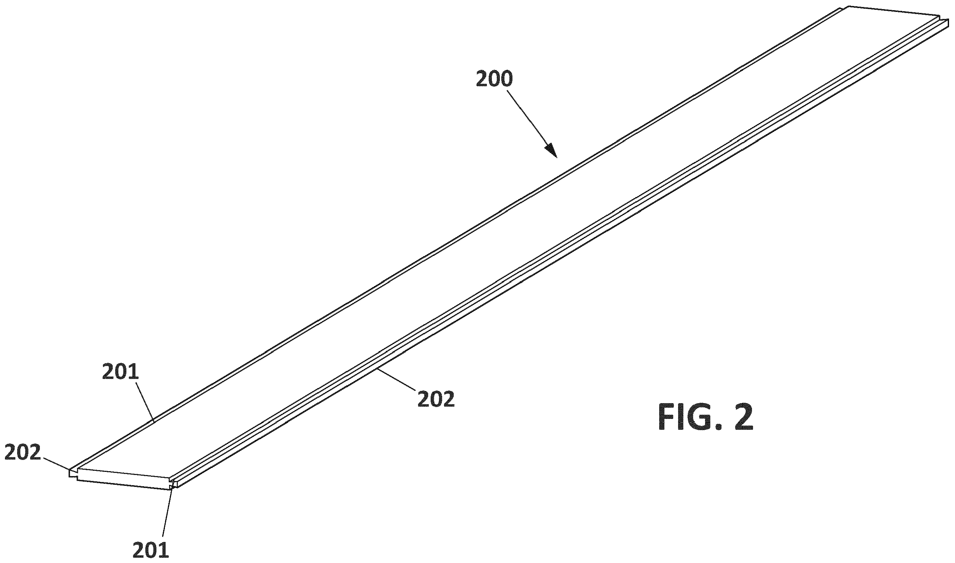

Figure 2 shows a perspective view of a transition element 200, according a particular embodiment of the present invention. It should be understood that the transition element 200 of Figure 2 may include additional components and that some of the components described herein may be removed and/or modified without departing from a scope of the described transition element 200. Additionally, implementation of the transition element 200 is not limited to such embodiment.

The transition element 200 has a length and a height that substantially corresponds to the length (L), four meters, and a height (H), 2,5 centimetres, of the hydraulic module. The transition element 200 may be also made of aluminium or any other material. The side walls 201 of the transition element 200 have respective protrusions 202 along their entire length that are configured to be inserted in respective grooves located in the side walls of adjacent hydraulic modules (not shown in this figure).This protrusions 202 may have a dove tail cross section as represented in figure 2.

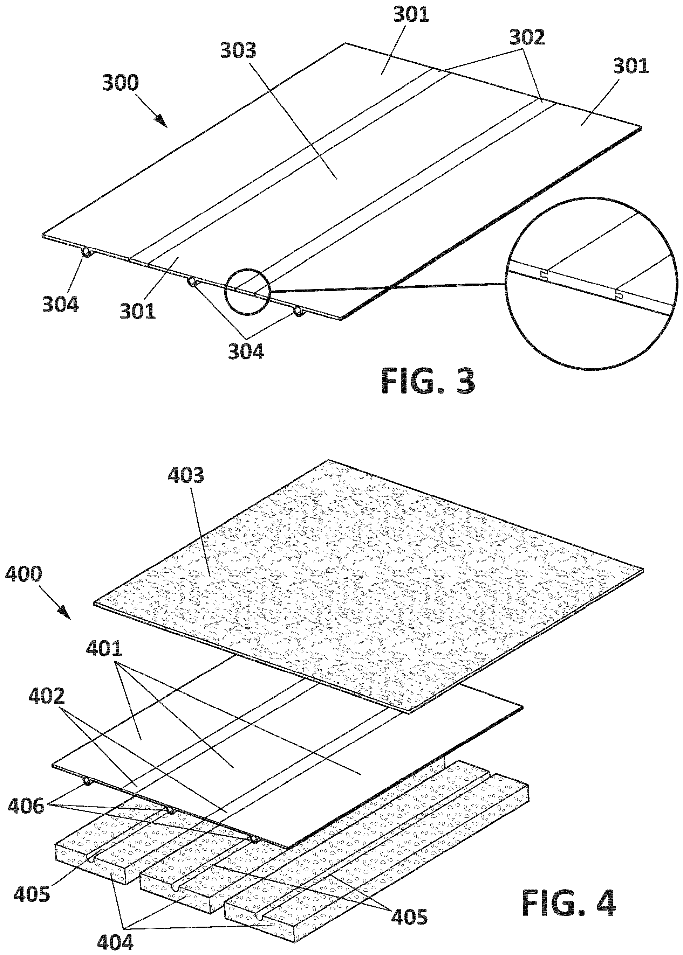

Figure 3 shows a perspective view of a modular hydraulic system 300 comprising three hydraulic modules 301, with corresponding hollow pipes 304, joined to each other by interposition of two transition elements 302, according a particular embodiment of the present invention. It should be understood that the modular hydraulic system 300 of Figure 3 may include additional components and that some of the components described herein may be removed and/or modified without departing from a scope of the described modular hydraulic system 300. Additionally, implementation of the modular hydraulic system 300 is not limited to such embodiment.

The three hydraulic modules 301 joined to each other by interposition of two transition elements 302 form a substantially planar front surface 303 of the modular hydraulic system 300, while through the hollow pipes 304 the thermal-transfer fluid flows h, remain at the rear surface of the modular hydraulic system 300.

Although the modular hydraulic system 300 shows three hydraulic modules 301 joined to each other by interposition of two transition elements 302 by means of female-male connectors as those shown in figures 1 and 2, additional hydraulic modules 301 may be attached in parallel to adapt the size of the modular hydraulic system 300 to the size of the surface to be covered by the modular hydraulic system 300.

Figure 4 shows a perspective view of a modular hydraulic system 400 comprising a cover layer 403, according a particular embodiment of the present invention. The modular hydraulic system 400 comprises three hydraulic modules 401, with corresponding hollow pipes 406, joined to each other by interposition of two transition elements 402.The cover layer 403 is for example a façade cladding or a drywall covering the planar front surface of the hydraulic modules 401. This cover layer 403 is attached to the transition elements 402 by means of adhesive or any mechanical connection means.

The modular hydraulic system 400 also comprises an insulation layer formed by three insulation elements 404 having a length and width that corresponds to the length and width of the hydraulic modules 400. The number of these insulation elements 404 does not necessarily to be coincident with the number of hydraulic modules 402. For example, in the assembly presented in Figure 4 the complete module can be covered by one single insulation layer. The insulation elements 404 have a longitudinal groove 405 in which the hollow pipes 406 are inserted. The insulation elements 404 are glued to the rear surface of the hydraulic modules.

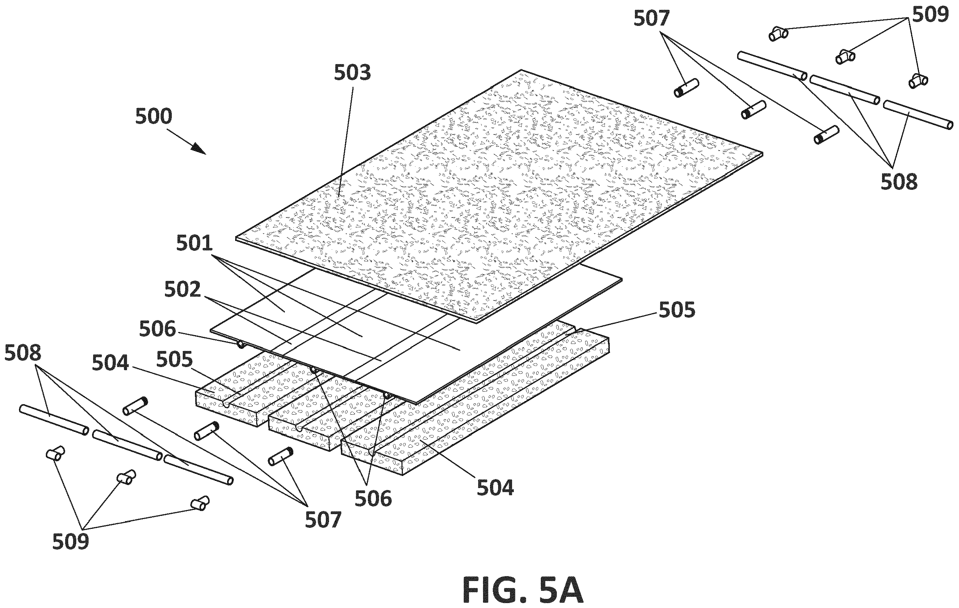

Figures 5A shows a perspective view of the modular hydraulic system of Figure 4 comprising the hydraulic connection means to create the hydraulic circuit, according to a particular embodiment of the present invention. As shown in this figure the system comprises three hydraulic modules 501, with corresponding hollow pipes 506, joined by two transition elements 502 and a cover layer 503 attachable to the transition elements 502. The system comprises straight connector 507 for connecting the hollow pipes 506 with T-shaped connectors 509 which in turn are connected to interconnecting pipes 508. that connect the hollow pipes of the hydraulic modules 501 to create the hydraulic circuit.

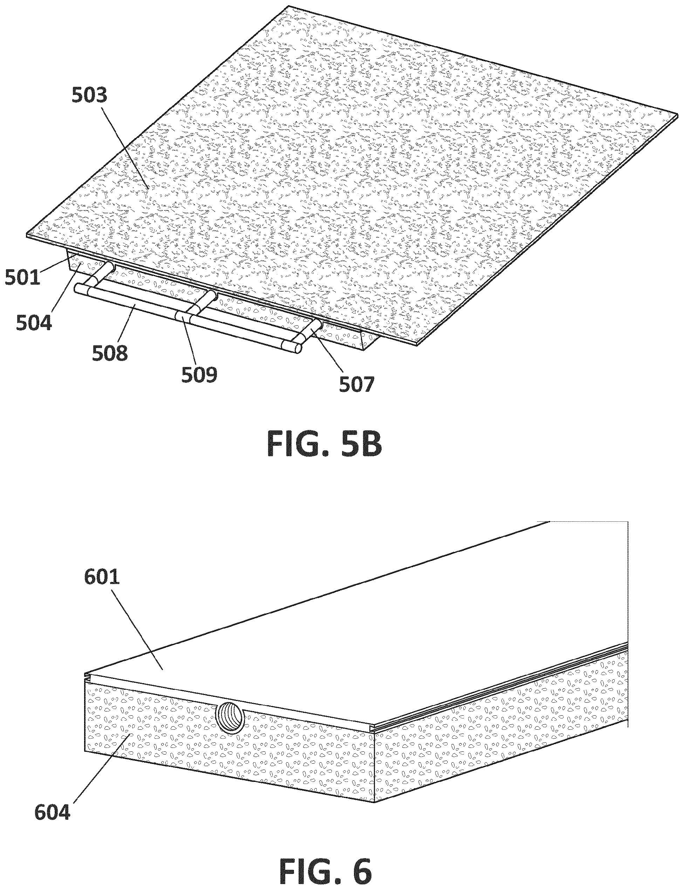

Figures 5B shows a perspective view of the modular hydraulic module of Figure 5A comprising three hydraulic modules 501, with corresponding hollow pipes 506, joined by two transition elements 502 and a cover layer 503 attached to the transition elements 502. The hydraulic connection means 507, 508 and 509 are coupled to the respective hollow pipes 506 of the hydraulic modules.

Figure 6 shows a perspective view of a hydraulic module 601 and an insulation layer 604 attached together forming a sandwiched modular element for easily joining to another such modular element.

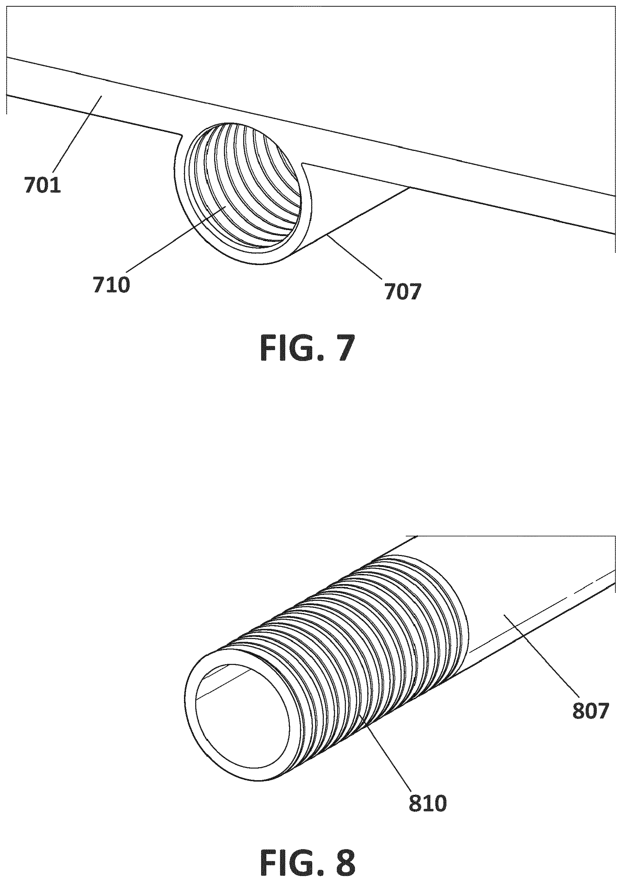

Figure 7 shows a detailed view of an inner threaded end 710 of a hollow pipe 707 of a hydraulic module 701, according a particular embodiment of the present invention for an easy connection to a pipe connector 807, with an external threaded edge 810, as shown in figure 8, to generate the complete pipework. The pipe connector can be straight, elbow or T-shaped to obtain a parallel or serpentine configuration as required

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The terms "coupled", "attached" or "joined" as used herein, is defined as connected, whether directly without any intervening elements or indirectly with at least one intervening elements, unless otherwise indicated.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A modular hydraulic system **characterized in that** the system comprises:
a plurality of hydraulic modules, each hydraulic module comprising a substantially planar panel and a hollow pipe attached to a rear surface of the substantially planar panel;
joining means configured to attach the substantially planar panels of two adjacent hydraulic modules to each other, the panels forming a front surface;
hydraulic connection means configured to connect the hollow pipes of the hydraulic modules to each other creating a hydraulic circuit an energy transfer fluid is to flow through, and wherein the energy transfer fluid is configured to exchange energy with the environment;
a cover layer adapted to be attachable to the joining means for covering the front surface of the panels, and
means for attaching the modular hydraulic system to a surface of a building with the hydraulic circuit being located between the substantially planar panels and the surface of the building and the cover layer acting as a finishing external surface.

2. The modular hydraulic system according to claim 1, wherein the joining means are transition elements, each transition element being configured to be coupled to an edge of the corresponding panel of two adjacent hydraulic modules.

3. The modular hydraulic system according to any one of the preceding claims, wherein the modular hydraulic system is installed on an outer surface of the building, preferably on a roof or a fagade, and the cover layer is configured to absorb solar radiation and transmit heat to the fluid flowing through the hydraulic circuit.

4. The modular hydraulic system according to claim 5, wherein the fluid enters the hydraulic circuit at a first temperature and exits the hydraulic circuit at a second temperature, the first temperature being lower than the second temperature.

5. The modular hydraulic system according to any one of claims 1 to 5, wherein the modular hydraulic system is installed on an inner surface of the building, preferably on a wall, a ceiling or a ground floor, and the panels and the cover layer are configured to emit heat transmitted from the fluid flowing through the hydraulic circuit.

6. The modular hydraulic system according to claim 7, wherein the fluid enters the hydraulic circuit at a first temperature and exits the hydraulic circuit at a second temperature, the first temperature being higher than the second temperature.

7. The modular hydraulic system according to any one of the preceding claims, wherein the hydraulic modules are made of metal.

8. The modular hydraulic system according to any one of the preceding claims, wherein the transition elements are made of metal or conductive plastic.

9. The modular hydraulic system according to any of the preceding claims wherein the cover layer is made of concrete, stone, ceramic, metal or any other finishing material.

10. The modular hydraulic system according to any of the preceding claims wherein the cover layer is attached to the joining means by adhesive or a mechanical connection.

11. The modular hydraulic system according to any one of the preceding claims, wherein the hollow pipes are longitudinal pipes extending along one of the two dimensions of the panels.

12. The modular hydraulic system according to claim 11, wherein the longitudinal hollow pipes are located in the middle of the respective panels.

13. The modular hydraulic system according to claims 1 to 10, wherein the hollow pipes are serpentine-shaped pipes entirely covering at least one of the two dimensions of the panels and at least partially covering the other dimension of the panels.

14. The modular hydraulic system according to any one of the preceding claims, comprising an insulation layer attached to a rear surface of the hydraulic modules.

15. The modular hydraulic system according to claim 14, wherein the insulation layer comprises grooves with a shape and location that corresponds to the shape and location of the hollow pipes, such that an inner surface of the insulation layer contacts the hollow pipes and the rear surface of the hydraulic modules.
